# EUROPEAN PATENT APPLICATION

(11) **EP 4 699 431 A1**
(43) Date of publication of application: **25.02.2026**
(21) Application number: 23933796.7
(22) Date of filing: 07.11.2023
(51) Int. Cl.: A01D 34/82, A01D 34/00

(54) **AUTONOMOUSLY OPERATING DEVICE**

(30) Priority: 17.04.2023 CN 202310420153; 27.04.2023 CN 202310488651; 18.05.2023 CN 202310577858; 23.05.2023 CN 202310606591; 25.06.2023 CN 202321623887 U; 25.06.2023 CN 202321628722 U; 25.06.2023 CN 202321623542 U; 25.06.2023 CN 202321622978 U; 25.06.2023 CN 202321619525 U; 25.06.2023 CN 202321619500 U; 25.06.2023 CN 202310757785; 25.06.2023 CN 202321623883 U
(71) Applicant: Zhejiang Sunseeker Industrial Co., Ltd., Jinhua, Zhejiang 321000 (CN)
(72) Inventor: WANG, Qidong, Jinhua, Zhejiang 321000 (CN); RAN, Yuanzhong, Jinhua, Zhejiang 321000 (CN)
(74) Representative: Manna, Sara
(86) International application number: PCT/CN2023/130318
(87) International publication number: WO 2024/216929

(57) **Abstract**

An autonomously operating device, comprising a chassis, which chassis comprises a first cover body (11) and a second cover body (12), the first cover body (11) and the second cover body (12) being snap-fitted to form a chassis sealing cavity. The autonomous operating device further comprises a first-type electronic device, a second-type electronic device and at least one electrical connector, wherein the first-type electronic device is defined as an electronic device which is completely arranged in the chassis sealing cavity; the second-type electronic device is defined as an electronic device which is at least partially exposed to the outside of the chassis sealing cavity; the first-type electronic device is not fixed to the second cover body (12); the second-type electronic device is fixed to the second cover body (12), and the second-type electronic device is electrically connected to the first-type electronic device by means of the electrical connector; and when the first cover body (11) is separated from the second cover body (12), the electrical connector is separated from the first-type electronic device or the second-type electronic device, so as to facilitate the disassembly and replacement of the second cover body (12).

## Description

The present disclosure claims priorities to the following patent applications, the contents of which are incorporated herein by reference in their entireties: Chinese Patent Application No. 2023104201530 filed with China National Intellectual Property Administration on April 17, 2023 and entitled "AUTONOMOUS OPERATION DEVICE", Chinese Patent Application No. 2023104886519 filed with China National Intellectual Property Administration on April 27, 2023 and entitled "AUTONOMOUS OPERATION DEVICE", Chinese Patent Application No. 2023105778583 filed with China National Intellectual Property Administration on May 18, 2023 and entitled "AUTONOMOUS OPERATION DEVICE", Chinese Patent Application No. 2023106065916 filed with China National Intellectual Property Administration on May 23, 2023 and entitled "AUTONOMOUS OPERATION DEVICE", Chinese Patent Application No. 2023216238870 filed with China National Intellectual Property Administration on June 25, 2023 and entitled "AUTONOMOUS OPERATION DEVICE", Chinese Patent Application No. 2023216235425 filed with China National Intellectual Property Administration on June 25, 2023 and entitled "AUTONOMOUS OPERATION DEVICE AND RAIN SENSOR THEREOF", Chinese Patent Application No. 2023216229782 filed with China National Intellectual Property Administration on June 25, 2023 and entitled "AUTONOMOUS OPERATION DEVICE", Chinese Patent Application No. 2023216195254 filed with China National Intellectual Property Administration on June 25, 2023 and entitled "AUTONOMOUS OPERATION DEVICE", Chinese Patent Application No. 2023216195004 filed with China National Intellectual Property Administration on June 25, 2023 and entitled "AUTONOMOUS OPERATION DEVICE", Chinese Patent Application No. 2023107577856 filed with China National Intellectual Property Administration on June 25, 2023 and entitled "AUTONOMOUS OPERATION DEVICE", and Chinese Patent Application No. 2023216238832 filed with China National Intellectual Property Administration on June 25, 2023 and entitled "AUTONOMOUS OPERATION DEVICE".

### TECHNICAL FIELD

The present disclosure relates to an autonomous operation device, in particular, to an outdoor operation robot, and further to an intelligent lawn mower.

### BACKGROUND

An intelligent lawn mower is a common mechanical tool for mowing lawns, vegetation, and the like, and is widely recognized by users for its convenient practicability. A lawn mower in the prior art includes a housing and a cutter assembly mounted on the housing. The housing is typically composed of an upper housing and a lower housing, which cooperate with each other. Components such as a sensor and a controller are arranged on the upper housing, and components such as a cutter assembly, a traveling assembly, and a circuit board are arranged on the lower housing. Components including the sensor and the controller are connected to the circuit board through a conductive wire to achieve an electrical conduction.

During use, the machine is exposed to the sun for a long time, the upper housing made of plastic material is prone to aging, and the upper housing is also prone to fracture due to impact with an obstacle during operation. Therefore, the upper housing usually needs to be replaced. However, the upper housing and the lower housing are connected through a conductive wire, which is not conducive to the replacement of the upper housing.

### SUMMARY

The objective of the present disclosure is to provide an at least partially improved autonomous operation device, which solves at least one of the above problems.

According to one aspect of the present disclosure, the objective is at least partially achieved by an autonomous operation device. The autonomous operation device includes a chassis, where the chassis includes a first cover body and a second cover body, and the first cover body and the second cover body are snap-fitted to form a chassis sealing cavity; the autonomous operation device further includes a first-type electronic device, a second-type electronic device, and at least one conductive connecting member, where the first-type electronic device is defined as an electronic device completely arranged in the chassis sealing cavity; the second-type electronic device is defined as an electronic device at least partially exposed outside the chassis sealing cavity. The first-type electronic device is not fixed to the second cover body, the second-type electronic device is fixed to the second cover body, and the second-type electronic device is electrically connected to the first-type electronic device through the electrical connector; when the first cover body is separated from the second cover body, the electrical connector is separated from the first-type electronic device or the second-type electronic device. Therefore, according to the autonomous operation device having the above features, most of the electronic devices that need to be electrically connected to the main control circuit are arranged on the first cover body, while the electronic devices that need to be fixed on the second cover body are electrically connected to the electronic devices on the first cover body through the electrical connectors; the electrical connectors will be separated from the corresponding electronic devices along with the separation of the first cover body or the second cover body, without affecting the disassembly and replacement of the second cover body.

The details of at least one embodiment will be set forth in the accompanying drawings and the description below. Other features, objectives, and advantages will be apparent from the description, the accompanying drawings, and the claims.

### BRIEF DESCRIPTION OF THE DRAWINGS

FIG. 1 is a schematic view of an intelligent lawn mower according to a specific embodiment of the present disclosure.
FIG. 2 is a top view of an intelligent lawn mower according to a specific embodiment of the present disclosure.
FIG. 3 is a sectional view taken along X1-X1 in FIG. 2 and a partial enlarged view thereof.
FIG. 4 is a schematic view of a first cover body according to a specific embodiment of the present disclosure, showing a top surface structure of the first cover body viewed from an angle.
FIG. 5 is a top view of a second cover body according to a specific embodiment of the present disclosure.
FIG. 6 is a schematic view of a second cover body according to a specific embodiment of the present disclosure.
FIG. 7 is a side view of a second cover body according to a specific embodiment of the present disclosure.
FIG. 8 is a bottom view of a third cover body according to a specific embodiment of the present disclosure.
FIG. 9 is a schematic view of a third cover body according to a specific embodiment of the present disclosure.
FIG. 10 is a sectional view taken along X3-X3 in FIG. 2.
FIG. 11 is an enlarged view of a portion P1 in FIG. 10.
FIG. 12 is a schematic view of a second cover body according to a specific embodiment of the present disclosure, showing a bottom surface structure of the second cover body.
FIG. 13 is a schematic view of a first cover body according to a specific embodiment of the present disclosure, showing a top surface structure of the first cover body viewed from an angle.
FIG. 14 is an enlarged view of a portion P2 in FIG. 10.
FIG. 15 is an exploded view of an intelligent lawn mower according to a specific embodiment of the present disclosure.
FIG. 16 is a schematic view of a second circuit board according to a specific embodiment of the present disclosure.
FIG. 17 is a schematic view of an elastic member according to a specific embodiment of the present disclosure.
FIG. 18 is an enlarged view of a portion P3 in FIG. 10.
FIG. 19 is an exploded view of an intelligent lawn mower according to a specific embodiment of the present disclosure.
FIG. 20 is an enlarged view of a portion P4 in FIG. 10.
FIG. 21 is an exploded view of a partial structure of an intelligent lawn mower according to a specific embodiment of the present disclosure, showing a mounting structure of a battery pack.
FIG. 22 is a schematic view of a rain sensor according to a specific embodiment of the present disclosure.
FIG. 23 is a side view of a rain sensor according to a specific embodiment of the present disclosure.
FIG. 24 is a schematic view of vicinity of a mounting hole according to a specific embodiment of the present disclosure.
FIG. 25 is a side view and a partial sectional enlarged view of an intelligent lawn mower according to a specific embodiment of the present disclosure, showing a mounting structure of a rain sensor, where the section line is X2-X2 in FIG. 2.
FIG. 26 is a side view and a partial sectional enlarged view of an intelligent lawn mower according to a specific embodiment of the present disclosure, showing another mounting structure of a rain sensor, where the section line is X2-X2 in FIG. 2.
FIG. 27 is a top view of an intelligent lawn mower according to another specific embodiment of the present disclosure.
FIG. 28 is a cross-sectional view taken along X4-X4 in FIG. 27 and a partial enlarged view thereof.
FIG. 29 is a cross-sectional view taken along X5-X5 in FIG. 27 and a partial enlarged view thereof.
FIG. 30 is a schematic view of a third cover body according to another specific embodiment of the present disclosure, showing a lower surface of the third cover body.
FIG. 31 is a schematic view and a partial enlarged view of a second cover body according to another specific embodiment of the present disclosure, showing a lower surface of the second cover body.
FIG. 32 is a schematic view and a partial enlarged view of a first cover body according to another specific embodiment of the present disclosure, showing an upper surface of the first cover body.
FIG. 33 is a partial enlarged view of the first cover body in FIG. 32 with a sixth circuit board hidden.
FIG. 34 is a schematic view of a sixth circuit board according to another specific embodiment of the present disclosure.

### DETAILED DESCRIPTION

The present disclosure will be described in detail below with reference to specific embodiments shown in the accompanying drawings. However, these embodiments are not intended to limit the present disclosure, and structural, method, or functional changes made by those of ordinary skill in the art according to these embodiments are included in the protection scope of the present disclosure.

It should be understood that in the description of the specific embodiments of the present disclosure, the terms "first", "second", and the like are used for descriptive purposes only and are not to be construed as indicating or implying relative importance or to implicitly indicate the number of technical features indicated. Therefore, features defined with "first" or "second" may explicitly or implicitly include one or more of the features.

In the specific embodiments of the present disclosure, unless otherwise explicitly stated or defined, the terms "interconnect", "connect", and the like shall be construed broadly. For example, "connect" may be "fixedly connect", "movably connect", "detachably connect", or "integrally connect"; "directly interconnect" or "indirectly interconnect through an intermediate"; or "the communication between the interiors of two elements" or "an interaction between two elements". For those of ordinary skill in the art, the specific meanings of the above terms in the present disclosure can be construed according to specific situations.

Unless otherwise explicitly specified or defined in the specific embodiments of the present disclosure, the recitation of a first feature "on" or "under" a second feature may include the recitation of the first and second features being in direct contact, and may also include the recitation that the first and second features are not in direct contact, but are in contact via another feature therebetween.

Unless otherwise explicitly specified or defined in the specific embodiments of the present disclosure, the term "a plurality of" means two or more.

The embodiment provides an autonomous operation system including an autonomous operation device, a docking station, and a boundary.

The autonomous operation device is, in particular, a robot that can autonomously move in a preset area and perform a specific operation, typically such as an intelligent sweeper/vacuum cleaner performing a cleaning operation, or an intelligent lawn mower performing a lawn mowing operation. The specific operation particularly refers to an operation for processing a work surface and changing the state of the work surface. The present disclosure is described in detail by taking an intelligent lawn mower as an example. The autonomous operation device can autonomously walk on the surface of a working area, and in particular, as an intelligent lawn mower, can autonomously perform a lawn mowing operation on the ground. The autonomous operation device at least includes a main body mechanism, a moving mechanism, a working mechanism, an energy module, a detection module, an interaction module, a control module, and the like.

The main body mechanism generally includes a chassis and a housing. The chassis is configured to mount and accommodate functional mechanisms and functional modules, such as the moving mechanism, the working mechanism, the energy module, the detection module, the interaction module, and the control module. The housing is generally configured to at least partially cover the chassis, primarily to enhance the aesthetics and recognizability of the autonomous operation device. In some embodiments, the housing is configured to be capable of resettable translation and/or rotation relative to the chassis under an external force. In cooperation with a suitable detection module, such as a Hall sensor, the housing can further serve to detect events like collisions and lifting. In this embodiment, the housing is configured to be fixedly connected to the chassis.

The moving mechanism is configured to support the main body mechanism on the ground and drive the main body mechanism to move on the ground, and generally includes a wheeled mechanism, a tracked or semi-tracked mechanism, and a walking mechanism. In this embodiment, the moving mechanism is a wheeled moving mechanism, which includes at least one driving wheel and at least one walking prime mover. The walking prime mover is preferably a motor, and in other embodiments, the walking prime mover may be an internal combustion engine or a machine that uses other types of energy sources to generate power. In this embodiment, a left driving wheel, a left walking prime mover that drives the left driving wheel, a right driving wheel, and a right walking prime mover that drives the right driving wheel are preferably provided. In this embodiment, the linear travel of the autonomous operation device is achieved by the rotation of the left and right driving wheels at the same speed in the same direction, and the steering travel is achieved by the rotation of the left and right driving wheels in the same direction at different speeds or in opposite directions. In other embodiments, the moving mechanism may further include a steering mechanism independent of the driving wheels and a steering prime mover independent of the walking prime mover. In this embodiment, the moving mechanism further includes at least one driven wheel, typically configured as a universal wheel, and the driving wheel and the driven wheel are respectively located at the front and rear ends of the autonomous operation device.

The working mechanism is configured for performing a specific operation task and includes a working member and a working prime mover that drives the working member to operate. For example, for an intelligent sweeper/vacuum cleaner, the working member includes a roller brush, a dust suction pipe, a dust collection chamber, and the like. For an intelligent lawn mower, the working member includes a cutting blade or a cutting deck, and further includes other components for optimizing or adjusting a mowing effect, such as a height adjustment mechanism for adjusting a mowing height. The working prime mover is preferably a motor, and may be, in another embodiment, an internal combustion engine or a machine that uses another type of energy source to generate power. In some other embodiments, the working prime mover and the walking prime mover are configured as the same prime mover.

The energy module is configured to provide energy for various work of the autonomous operation device. In this embodiment, the energy module includes a battery and a charging connection structure, where the battery is preferably a rechargeable battery; the charging connection structure is preferably a charging electrode that may be exposed outside the autonomous operation device.

The detection module is configured as at least one sensor that senses an environmental parameter or a working parameter of the autonomous operation device. Typically, the detection module may include sensors related to the definition of the working area, such as magnetic induction, collision, ultrasonic, infrared, radio, and various types. The types of sensors are adapted to the position and number of the corresponding signal generation apparatuses. The detection module may further include positioning navigation-related sensors such as GPS positioning apparatuses, laser positioning apparatuses, electronic compasses, acceleration sensors, odometers, angle sensors, and geomagnetic sensors. The detection module may further include sensors related to its own working safety, such as an obstacle sensor, a lifting sensor, and a battery pack temperature sensor. The detection module may further include sensors related to an external environment, such as an ambient temperature sensor, an ambient humidity sensor, a light sensor, and a rain sensor.

The interaction module is configured at least to receive control instruction information inputted by a user, transmit information requiring user perception, and communicate with other systems or devices to transmit and receive information. In this embodiment, the interaction module includes an input apparatus arranged on the autonomous operation device for receiving control instruction information inputted by a user, typically such as a control panel and an emergency stop key. The interaction module further includes a display screen, an indicator light, and/or a buzzer arranged on the autonomous operation device, enabling a user to perceive information through light or sound. In other embodiments, the interaction module includes a communication module arranged on the autonomous operation device and a terminal device independent from the autonomous operation device, such as a mobile phone, a computer, and a network server. User control instruction information or other information may be inputted on the terminal device and reach the autonomous operation device via a wired or wireless communication module.

The control module typically includes at least one processor and at least one non-volatile memory. The memory stores a pre-written computer program or an instruction set, and the processor, according to the computer program or the instruction set, controls the performance of movements, work, and the like of the autonomous operation device. Further, the control module can also control and adjust the corresponding actions of the autonomous operation device and modify parameters in the memory according to a signal of the detection module and/or a user control instruction.

The boundary is configured to define the working area of the robotic system and generally includes an outer boundary and an inner boundary. The autonomous operation device is limited to move and work within the outer boundary, outside the inner boundary, or between the outer boundary and the inner boundary. The boundary may be solid, typically such as a wall, fence, or railing; the boundary may also be virtual, typically such as a virtual boundary signal issued by a boundary signal generation apparatus, which is usually an electromagnetic signal or an optical signal, or a virtual boundary set in an electronic map, for example formed by two-dimensional or three-dimensional coordinates, for an autonomous operation device provided with a positioning apparatus (such as GPS). In this embodiment, the boundary is configured as a closed conductive wire that is electrically connected to the boundary signal generation apparatus, which is typically arranged in the docking station.

The docking station is usually configured on or within the boundary for the autonomous operation device to dock, and is particularly capable of supplying energy to the autonomous operation device docked at the docking station.

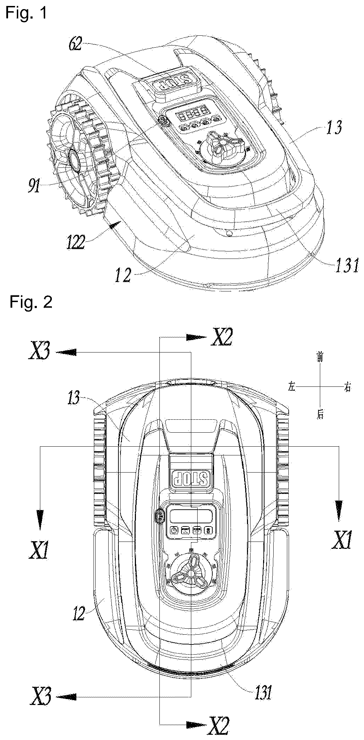

Referring to FIGs. 1 to 9, a specific embodiment of the present disclosure provides an autonomous operation device, including a chassis at least formed by snap-fitting a first cover body 11 and a second cover body 12 and provided with at least one chassis sealing cavity. The first cover body 11 and the second cover body 12 are fixedly connected by screws. The edge of the first cover body 11 is provided with a plurality of first screw holes 111, and the second cover body 12 is provided with a plurality of second screw holes 121 corresponding to the first screw holes 111 on the first cover body 11. The edge of the second cover body 12 is provided with a skirt portion 122 that covers the first cover body 11. The primary function of the skirt portion 122 is to prevent the hands and feet of a person from extending into the bottom of the lawn mower to contact the moving blade. Secondly, the skirt portion 122 may also shield the first cover body 11 to shade and avoid impact on the first cover body 11; that is, the second cover body 12 protects the first cover body 11 to prevent the first cover body 11 from being damaged, and only the second cover body 12 needs to be replaced during replacement.

The chassis is further provided with a third cover body 13. The third cover body 13 is ring-shaped as a whole, and one end of the third cover body is provided with a grasping portion 131. The second cover body 12 is provided with a concave portion 123 at a position corresponding to the grasping portion 131. When the third cover body 13 and the second cover body 12 are mounted together, the grasping portion 131 corresponds to the concave portion 123. There is a gap between the grasping portion 131 and the second cover body 12 in the horizontal direction and the vertical direction, which is convenient for hands to pass through. The user may also lift the autonomous operation device by gripping the grasping portion 131. The horizontal plane herein refers to a plane that is tangent to the moving mechanism of the autonomous operation device. The vertical direction refers to a plane perpendicular to the horizontal plane. When the autonomous operation device is placed on the ground, "high" refers to the direction distal to the ground, and "low" refers to the direction proximal to the ground. Referring to FIG. 2, in this specific embodiment, the traveling direction of the autonomous operation device is defined as the front and rear directions, respectively, and the corresponding two sides are defined as the left and right directions, respectively.

The third cover body 13 and the second cover body 12 are fixedly connected by screws and snaps. A plurality of third screw holes 124 are formed in the rear end of the second cover body 12, side clamping groove portions 125 are arranged on the left and right sides of the top surface of the second cover body 12, respectively, a middle clamping groove portion 126 is arranged in the middle of the second cover body 12, and end clamping groove portions 127 are arranged at the rear end of the second cover body 12. The third cover body 13 is provided with a plurality of fourth screw holes 132 corresponding to the third screw holes 124, side clamping hook portions 133 corresponding to the side clamping groove portions 125, a middle clamping hook portion 134 corresponding to the middle clamping groove portion 126, and end clamping hook portions 135 corresponding to the end clamping groove portions 127. During assembly, each clamping hook portion is clamped into the corresponding clamping groove portion for fixation, and the third cover body 13 is fixed to the second cover body 12 by screws located in the third screw holes and the fourth screw holes.

The autonomous operation device further includes a first-type electronic device, a second-type electronic device, and at least one conductive connecting member. The first-type electronic device is defined as an electronic device completely arranged in the chassis sealing cavity, and the second-type electronic device is defined as an electronic device at least partially exposed outside the chassis sealing cavity.

The first-type electronic device is not fixed to the second cover body 12, the second-type electronic device is fixed to the second cover body 12, and the second-type electronic device is electrically connected to the first-type electronic device through the electrical connector. When the first cover body is separated from the second cover body, the electrical connector is separated from the first-type electronic device or the second-type electronic device.

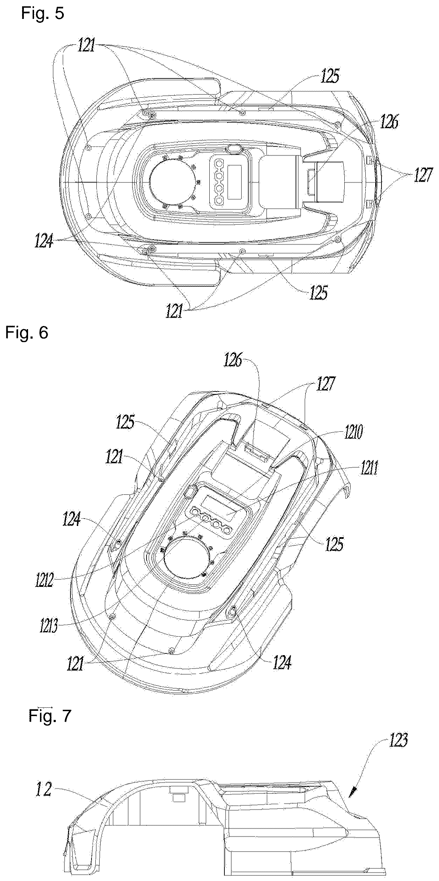

Referring to FIGs. 6 and 10 to 13, the first-type electronic device includes a first circuit board 21, and a first Hall sensor 22 is arranged on the first circuit board 21. The autonomous operation device further includes a driven wheel assembly connected to the first cover body 11. The specific structure of the driven wheel assembly has been disclosed in CN213073601U, and CN213073601U is incorporated herein in its entirety. The first cover body 11 in this specific embodiment corresponds to the chassis lower cover in CN213073601U. The first Hall sensor 22 on the first circuit board 21 cooperates with a first magnetic member 31 on the driven wheel assembly to sense the position of the driven wheel, thereby detecting whether the autonomous operation device is lifted. In this embodiment, the first magnetic member 31 is a permanent magnet.

The first circuit board 21 is fixed in the chassis sealing cavity, and the chassis sealing cavity is formed by snap-fitting the first cover body 11 and the second cover body 12. Specifically, the first cover body 11 is provided with a first lower limiting portion 112 and a first positioning portion 113, and the second cover body 12 is provided with a first upper limiting portion 128. The first positioning portion 113 is composed of a plurality of first rib plates extending upward from the first cover body 11, and the plurality of first rib plates jointly form a groove matching the edge of the first circuit board 21. After the first circuit board 21 is mounted, the first positioning portion 113 limits the position of the first circuit board 21 in the front-rear and left-right directions and limits the movement thereof, the first lower limiting portion 112 and the first upper limiting portion 128 are located at the upper and lower ends of the first circuit board 21, respectively, and the first lower limiting portion 112 and the first upper limiting portion 128 are a rib extending upward from the first cover body and a rib extending downward from the second cover body, respectively, which cooperate to limit the position of the first circuit board 21 in the up-down direction and limit the movement thereof.

In this specific embodiment, the lifting sensor configured to detect whether the autonomous operation device is lifted is implemented through cooperation between the first magnetic member 31 and the first Hall sensor 22. The first Hall sensor 22 determines, based on a magnetic field change caused by a position change of the first magnetic member 31, whether the driven wheel of the autonomous operation device is lifted or falls into a concave hole and cannot travel. There is no conductive-wire connection between the first Hall sensor 22 and the first magnetic member 31; therefore, the first circuit board 21 may be fixed in the chassis sealing cavity, and the first magnetic member 31 may be located outside the chassis sealing cavity.

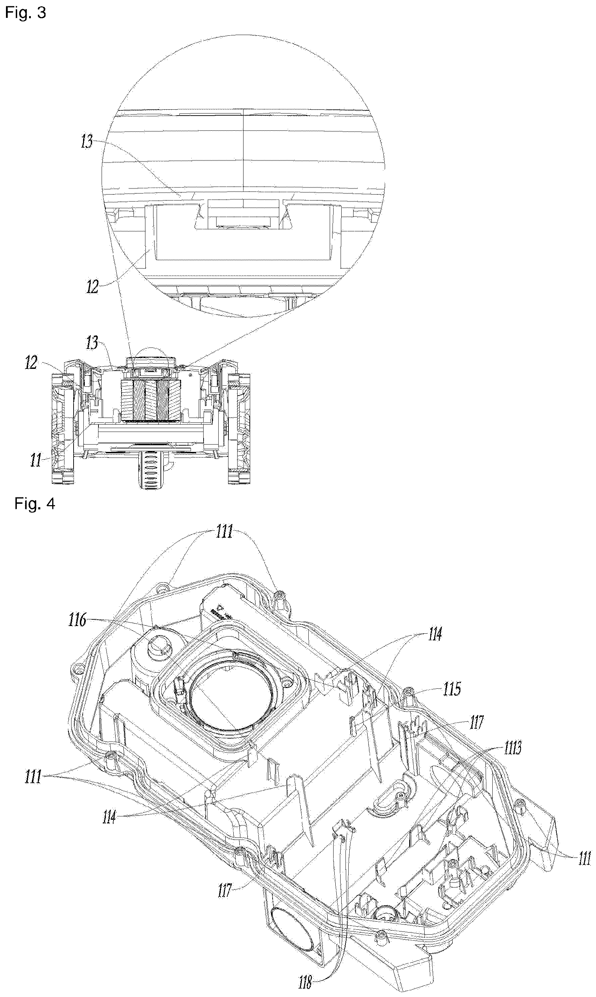

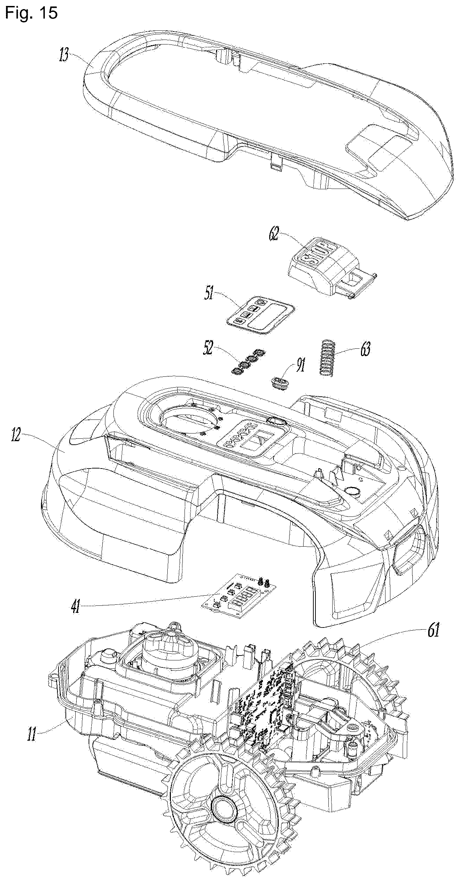

In the prior art, a second circuit board provided with a display screen is usually fixedly connected to the second cover body, and the second circuit board needs to be connected to a third circuit board that is located on the first cover body and serves as a main control board through a conductive wire. In this case, at least one plug-and-socket pair needs to be arranged between the first cover body and the second cover body to achieve the electrical connection between the second circuit board and the third circuit board. Further, when the first cover body and the second cover body are disassembled and assembled, the plug-and-socket pair between the second circuit board and the third circuit board needs to be separated first, resulting in complicated disassembly and assembly, and the plug-and-socket pair is easy to be damaged. Referring to FIGs. 4, 6, 10, and 12 to 16, the first-type electronic device according to an embodiment of the present disclosure includes a second circuit board 41. Buttons 43 and a display screen 42 are arranged on the second circuit board 41, and the content displayed on the display screen 42 may be changed through the button 43. In addition, the button 43 and the display screen 42 may alternatively be directly fixed to the first cover body 11, and are electrically connected, through a conductive wire, to a circuit board provided with a control circuit.

The second circuit board 41 is also fixed in the chassis sealing cavity. Specifically, the first cover body 11 is provided with a second lower limiting portion 114, a second positioning post 115, and second clamping hooks 116, and the second cover body 12 is provided with a second upper limiting portion 129. The second lower limiting portion 114 is composed of a plurality of second rib plates, and the plurality of second rib plates jointly form a groove matching the outer shape of the second circuit board 41 to support the second circuit board 41. When the second circuit board 41 is mounted, the second lower limiting portion 114 limits the position of the second circuit board in the front-rear and left-right directions and limits the movement thereof. The second circuit board 41 is provided with a positioning hole 44 corresponding to the second positioning post 115. When the second circuit board 41 is mounted, the second positioning post 115 extends into the positioning hole 44. On one hand, the second positioning post 115 auxiliary limits the position of the second circuit board 41 in the horizontal direction and limits the movement thereof; on the other hand, the second positioning post also plays a role in preventing an incorrect mounting direction. The second clamping hooks 116 are distributed at the edge of the second circuit board 41. When the second circuit board 41 is mounted, the second clamping hooks 116 catch the edge of the second circuit board 41, and cooperate with the second lower limiting portion 114 to limit the position of the second circuit board 41 in the up-down direction and limit the movement thereof.

The second upper limiting portion 129 consists of a plurality of second protruding ribs arranged on the bottom surface of the second cover body 12 and extending toward the direction of the first cover body 11, and the plurality of second protruding rib plates jointly form a groove matching the outer shape of the second circuit board 41. When the second circuit board 41 is mounted, the second upper limiting portion 129 limits the position of the second circuit board 41 in the front-rear and left-right directions and limits the movement thereof.

The second cover body 12 is provided with a cover plate mounting portion 1210, and the cover plate mounting portion 1210 is arranged in the sunken area of the upper surface of the second cover body 12. A window penetrating through the second cover body 12 is formed in the cover plate mounting portion 1210, and the window includes a display screen hole 1211 and button holes 1213. An elastic member mounting portion 1212 is further arranged on the cover plate mounting portion 1210, and the button hole 1213 is formed in the elastic member mounting portion 1212. The display screen hole 1211 and the button hole 1213 penetrate through the second cover body 12, the position of the display screen hole 1211 corresponds to the position of the display screen 42, and the position of the button hole 1213 corresponds to the position of the button 43. A cover plate 51 is configured as a key film, the shape of which matches the shape of the cover plate mounting portion 1210, and the lower surface of which is coated with an adhesive, which can be adhered to the cover plate mounting portion and seal the display screen hole and the button hole. One cover plate 51 may be provided to cover both the display screen hole 1211 and the button hole 1213, or a plurality of cover plates may be provided to cover the display screen hole 1211 and the button hole 1213, respectively.

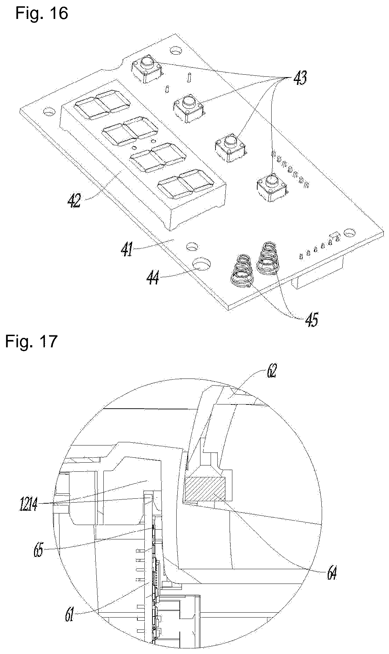

Referring to FIG. 17, an elastic member 52 is made of a rubber material, and includes a hollow frame body 521 and an elastic block 522. The elastic block 522 is movably connected into the hollow frame body 521 in the axial direction of the hollow frame body 521. After being pressed in the axial direction of the hollow frame body 521, the elastic block 522 may abut against an action contact of the button 43 to achieve a pressing action on the button 43; after being released, the elastic block 522 may rebound to an initial position through the inherent elasticity of the elastic member 52, achieving the reset of the elastic block. The detailed structure of the elastic member 52 and its cooperation with the button 43 have been disclosed in CN215122130U, and CN215122130U is incorporated herein in its entirety. The cover plate 51 is configured to be light-transmissive in an area corresponding to the display screen hole 1211, and an operator can view content displayed on the display screen through the cover plate 51. Therefore, when the second circuit board 41 is fixed in the chassis sealing cavity, the purpose of displaying content on the display screen can also be achieved, so that there is no conductive-wire connection between the second circuit board 41 and the second cover body 12.

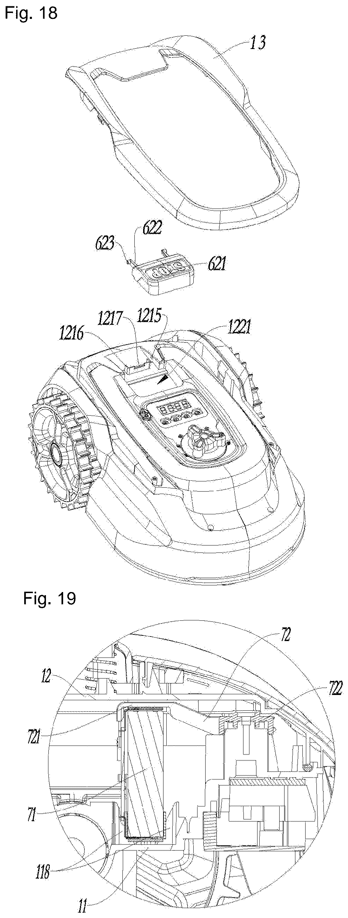

Referring to FIGs. 4, 10 to 15, and 18, the first-type electronic device according to an embodiment of the present disclosure includes a third circuit board 61. The third circuit board 61 is configured as a main control board of the autonomous operation device. The third circuit board 61 is also fixed in the chassis sealing cavity. Specifically, the first cover body 11 is provided with third positioning portions 117 and a third lower limiting portion 118, and the second cover body is provided with a third upper limiting portion 1214. The third positioning portions 117 are distributed on the left and right sides of the third circuit board 61, and are each provided with a groove for accommodating the edge of the third circuit board 61. When the third circuit board 61 is mounted, the left and right side edges of the third circuit board 61 are located in the grooves, so that the third positioning portion 117 limits the position of the third circuit board 61 in the front-rear and left-right directions and limits the movement thereof. The third lower limiting portion 118 is located in the rear side direction of the third circuit board 61 and is provided with a groove for accommodating the edge of the third circuit board 61. When the third circuit board 61 is mounted, the lower side edge of the third circuit board 61 is located in the groove, so that the third lower limiting portion 118 limits the position of the third circuit board 61 in the front-rear direction and limits the movement thereof. The third upper limiting portion 1214 consists of a plurality of third protruding ribs arranged on the bottom surface of the second cover body 12 and extending toward the direction of the first cover body 11, and the plurality of third protruding rib plates jointly form a groove matching the upper side edge of the third circuit board 61. When the third circuit board 61 is mounted, the upper side edge of the third circuit board 61 is located in the groove, so that the third upper limiting portion 1214 limits the position of the third circuit board 61 in the front-rear direction and limits the movement thereof.

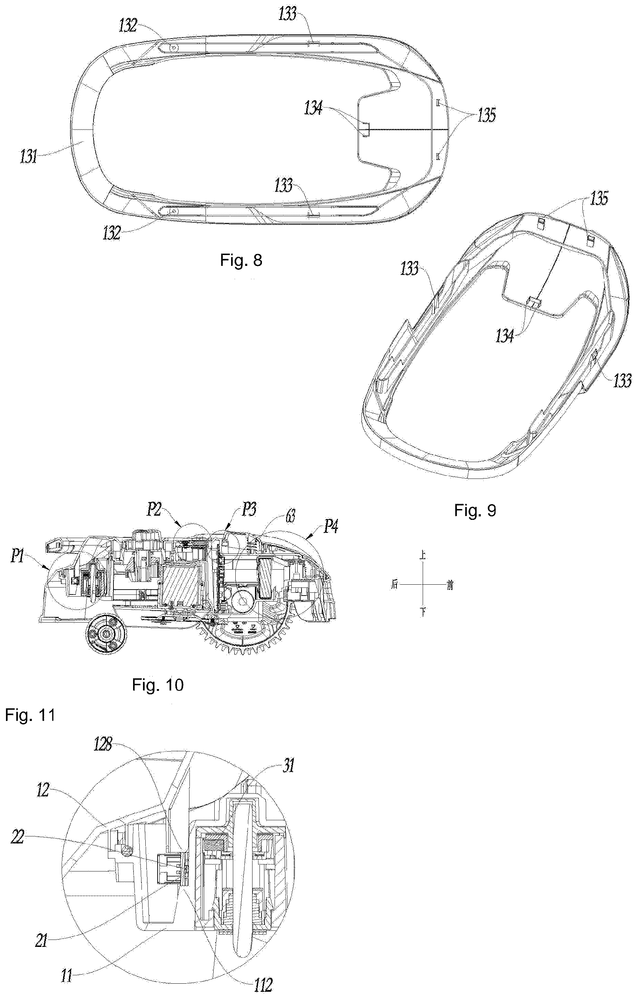

Referring to FIGs. 10, 15, and 18 to 19 again, the autonomous operation device according to an embodiment of the present disclosure further includes an emergency stop assembly. The emergency stop assembly includes an emergency stop key 62, an elastic member 63, a second magnetic member 64, and a second Hall sensor 65. The second magnetic member 64 is a permanent magnet. The emergency stop key 62 includes a pressing portion 621, two symmetrical arm portions 622, and two symmetrical shaft portions 623. The second cover body 12 is provided with a key receiving portion 1221 and two symmetrical shaft holes 1215, a wall 1216 is arranged between the two opposite shaft holes, and a middle clamping groove 1217 is formed in the middle position of the wall 1216. When the emergency stop key 62 is mounted, the two arm portions 622 are first pressed toward the middle, so that the shaft portion 623 can be clamped into the shaft hole 1215; that is, the assembly of the emergency stop key is completed. The elastic member 63 is located between the emergency stop key 62 and the second cover body 12 and serves to reset the emergency stop key 62. The second magnetic member 64 is fixedly mounted on the emergency stop key 62, and the second Hall sensor 65 is fixedly mounted on the third circuit board 61 at a position corresponding to the second magnetic member 64. When the emergency stop key 62 is pressed, the second magnetic member 64 acts in a direction proximal to the second Hall sensor 65 along with the emergency stop key 62, so that the magnetic field of the second magnetic member 64 relative to the second Hall sensor 65 changes. The second Hall sensor 65 detects the magnetic field change of the second magnetic member 64 to determine that the emergency stop key 62 is pressed, and then transmits an emergency stop signal to the related functional components on the third circuit board 61 to achieve the purpose of emergency stop. Since there is no conductive-wire connection between the second Hall sensor 65 and the second magnetic member 64, the third circuit board 61 may be fixed in the chassis sealing cavity, and the second magnetic member 64 may be located outside the chassis sealing cavity.

Referring to FIGs. 4, 10, and 20 to 21, the first-type electronic device according to an embodiment of the present disclosure includes a battery pack 71. The battery pack 71 is mounted on the first cover body 11. The first cover body 11 is provided with a fourth lower limiting portion 1113, the fourth lower limiting portion 1113 is composed of a plurality of fourth rib plates, and the plurality of fourth rib plates jointly form a groove matching the outer shape of the battery pack 71. The battery pack 71 is placed in the groove to limit the position of the battery pack 71 in the front-rear and left-right directions and limit the movement thereof.

The autonomous operation device further includes a battery fixing member 72, and the battery fixing member 72 is provided with a first end 721 and a second end 722 arranged opposite to each other. The first end 721 is of a clamping hook structure, which extends above the top of the battery pack 71 and hooks the side wall of the battery pack 71 to limit the position of the battery pack 71 in the up-down direction and limit the movement thereof. The second end 722 is of a plate-shaped structure, a fourth screw hole 723 is formed in the middle of the second end 722, a screw post 119 matching the fourth screw hole 723 is arranged on the first cover body 11, and the second end 722 is fixedly connected to the first cover body 11 by screws. After the battery pack 71 is mounted, there is a gap between the upper surface (including the battery fixing member 72) of the battery pack and the inner surface of the second cover body 12, so as to reserve space for the expansion of the battery pack 71 during use. Further, there is a gap of not less than 0.8 mm between the upper surface of the battery pack 71 and the inner surface of the second cover body 12, and further, the gap is not less than 1 mm.

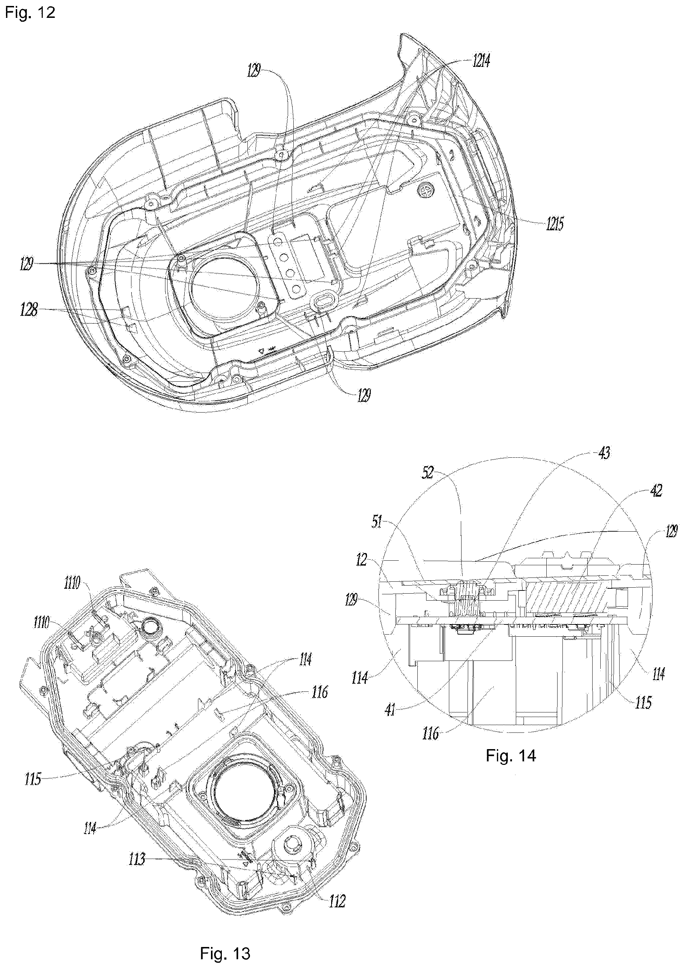

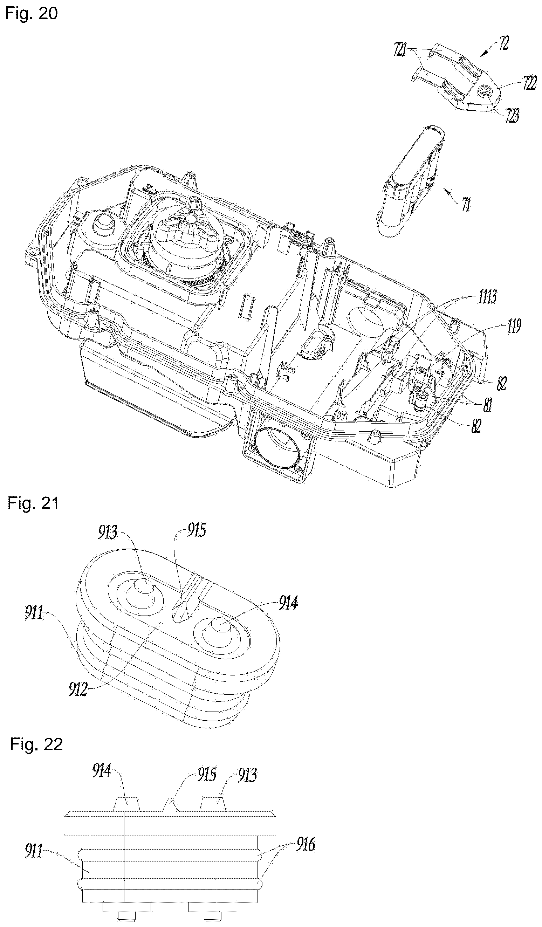

Referring to FIGs. 13 and 21, the first-type electronic device according to an embodiment of the present disclosure further includes a fifth circuit board 81, and a boundary line sensor 82 arranged on the fifth circuit board 81. In this embodiment, the boundary line sensor 82 is configured as an inductor; the autonomous operation device includes two fifth circuit boards 81, and each fifth circuit board is provided with an inductor. The first cover body 11 is provided with fifth positioning portion 1110, and the fifth positioning portion 1110 is configured as a groove extending upward from the first cover body 11. When the fifth circuit board 81 is mounted, the edge of the fifth circuit board 81 is inserted into the groove, so that the fifth positioning portion 1110 limits the position of the fifth circuit board 81 in the front-rear and left-right directions and limits the movement thereof. The second cover body 12 is provided with a fifth abutment surface 1215 corresponding to the shape of the top surface of the fifth circuit board 81. In this embodiment, both the fifth circuit board 81 and the fifth abutment surface 1215 are configured as surfaces parallel to the horizontal plane. In the present disclosure, the horizontal plane refers to a plane that is tangent to the moving mechanism of the autonomous operation device. After the fifth circuit board 81 is mounted, the bottom surface of the fifth positioning portion 1110 and the fifth abutment surface 1215 cooperate to limit the position of the fifth circuit board 81 in the up-down direction and limit the movement thereof.

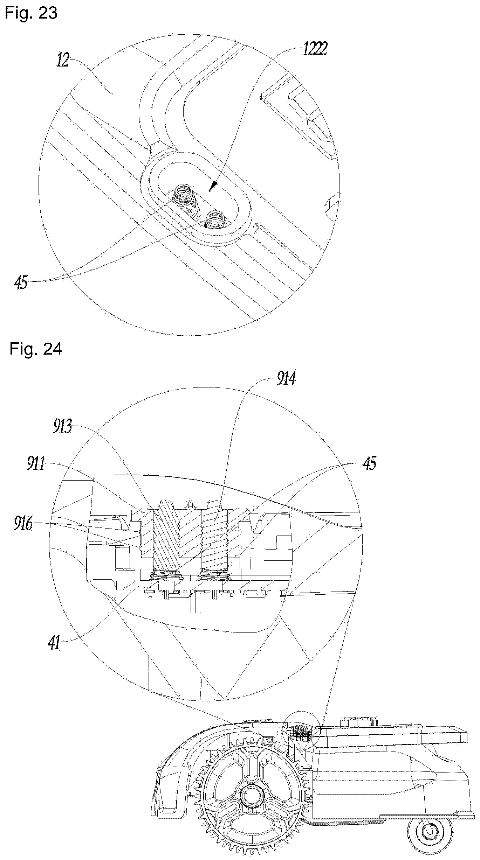

Referring to FIGs. 1, 15, 16, and 22 to 24, the autonomous operation device according to an embodiment of the present disclosure includes a rain sensor 91. The rain sensor includes a cylindrical main body 911, a water storage tank 912 located on the top surface of the main body 911, and a first electrode terminal 913 and a second electrode terminal 914 spaced apart therein in the longitudinal direction, and further includes a convex portion 915 arranged between the first electrode terminal 913 and the second electrode terminal 914. The convex portion 915 extends from the edge of the water storage tank 912 to the middle of the water storage tank 912. The convex portion 915 is not higher than the first electrode terminal 913 and/or the second electrode terminal 914.

A mounting hole 1222 is formed in the second cover body 12, the mounting hole 1222 penetrates through the second cover body 12, and the position of the mounting hole 1222 corresponds to the second circuit board 41 on which the display screen 42 is mounted. The mounting hole 1222 may penetrate through the second cover body 12 as a whole, or may penetrate through the second cover body only in an area corresponding to the electrode terminal. It should be understood by those skilled in the art that, in general, the intelligent lawn mower includes one or at least two circuit boards, and the rain sensor 91 needs to be electrically connected to one of the circuit boards. In this embodiment, the rain sensor is selected to be electrically connected to the second circuit board 41, and certainly, the rain sensor may also be electrically connected to other circuit boards according to actual situations.

The shape of the mounting hole 1222 is adapted to the shape of the main body 911 of the rain sensor. In this embodiment, the main body 911 of the rain sensor is made of an elastic material, the main body 911 is provided with at least one sealing ring 916, and the sealing ring 916 is in an interference fit with the inner wall of the mounting hole 1222 to achieve sealing, so as to prevent rainwater from entering the chassis sealing cavity from the mounting hole 1222.

The second circuit board 41 is provided with electrical connectors 45 corresponding to the positions of the first electrode terminal 913 and the second electrode terminal 914. In one embodiment, the electrical connector 45 is configured to be elastic. Specifically, the electrical connector 45 features two states. When the rain sensor 91 is not mounted, the electrical connector 45 is in a first state, and in this case, the distance from the contact end of the electrical connector 45 to the second circuit board 41 is d1. When the rain sensor 91 is mounted, the electrical connector 45 is in a second state, and in this case, the distance from the contact end of the electrical connector 45 to the second circuit board 41 is d2, where d1 is greater than d2. When the electrical connector 45 is in the second state, the electrical connector 45 applies a force onto the rain sensor 91, so that the rain sensor 91 has a tendency to move distal to the second circuit board 41. The contact end of the electrical connector 45 refers to a portion of the electrical connector 45 electrically connected to and in contact with the electrode terminal when the rain sensor 91 is mounted. In this embodiment, the electrical connector 45 is configured as a coil spring, a first end thereof is configured as the contact end, and a second end thereof is connected to the second circuit board and electrically connected to the control circuit. Further, the outer diameter of the second end of the coil spring is greater than the outer diameter of the first end. Further, the first electrode terminal and the second electrode terminal are also provided with contact ends, the contact ends of the first electrode terminal and the second electrode terminal are defined as surfaces electrically connected to and in contact with the electrical connectors, and the projections of the contact ends of the electrical connectors on the contact ends of the first electrode terminal and the second electrode terminal at least partially fall within the range of the contact ends of the first electrode terminal and the second electrode terminal. Preferably, the projections of the contact ends of the electrical connectors on the contact ends of the first electrode terminal and the second electrode terminal completely fall within the range of the contact ends of the electrode terminals. Since the electrical connection between the rain sensor 91 and the second circuit board 41 is achieved through the elastic electrical connector 45 for conductive contact, the electrical connection between the rain sensor and the second circuit board does not hinder the separation of the second cover body 12 from the first cover body 11.

In this embodiment, the electrical connector 22 may be further configured as another electrical contact with elasticity, for example, a metal spring plate. The fixed end of the metal spring plate is connected to the second circuit board and electrically connected to the control circuit, and the deformable end is in contact with the electrode terminal to achieve conductive contact.

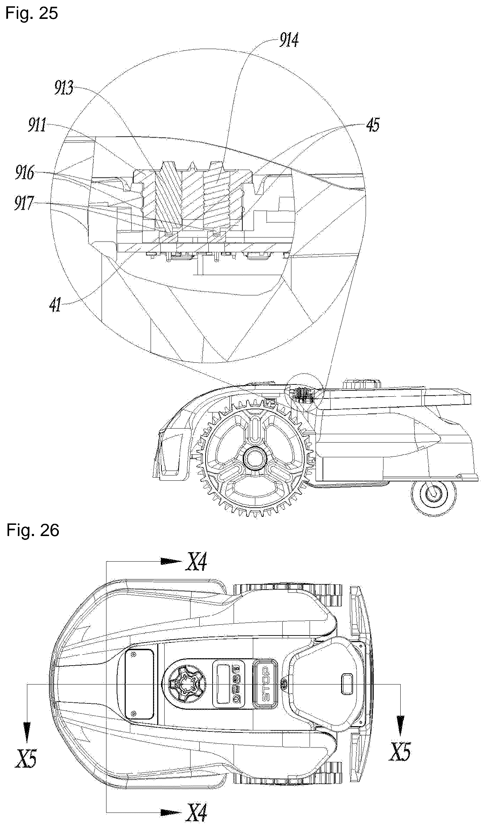

In another embodiment, referring to FIG. 26, the electrical connector 45 is configured as a socket, and the bottoms of the first electrode terminal 913 and the second electrode terminal 914 are both provided with pins 917 matching the socket. When the second cover body 12 is assembled on the first cover body 11, the pins 917 of the first electrode terminal and the second electrode terminal are inserted into the corresponding sockets from top to bottom in the assembly direction to achieve an electrical connection. When the second cover body 12 is disassembled from the first cover body 11, the pins 917 of the first electrode terminal and the second electrode terminal are separated from the respective sockets in the disassembly direction, so that the removal of the second cover body 12 is not hindered. When the first cover body 11 and the second cover body 12 are assembled, the first cover body 11 is provided with a positioning portion extending into the second cover body 12, or the second cover body 12 is provided with a positioning portion extending into the first cover body 11. Alternatively, the first cover body is provided with a positioning portion extending into the second cover body, and the second cover body is also provided with a positioning portion extending into the first cover body. Referring to FIGs. 4 to 6, the positioning portion in this embodiment is a screw post provided with the first screw hole 111 and/or the second screw hole 121, and the screw post extends into the corresponding screw hole to play a positioning and limiting role when the second cover body 12 is assembled on the first cover body 11. Assuming that the minimum depth of the positioning portion extending into the corresponding cover body is d3, when the second cover body 12 is fixedly assembled with the first cover body 11, the maximum depth of the pin 917 inserted into the corresponding socket is d4, where d3 is greater than d4, so that when the second cover body 12 is separated from the first cover body 11, the pin and the socket are necessarily in a separated state, which can ensure that the conductive insertion between the pin and the socket will not affect the disassembly of the second cover body 12.

Referring to FIGs. 1 to 26, electronic devices arranged in the autonomous operation device are classified into two types based on the above solutions. The electronic device herein includes a power supply such as a battery pack that can provide electric energy to another component, an electrical element such as a controller, a sensor, a resistor, a capacitor, an inductor, a diode, a triode, or an electric motor, a conductive wire connecting the power supply and the electrical element, a circuit board that carries the electrical element, and the like. An electronic device that needs to be placed entirely within the sealing cavity is referred to as the first-type electronic device; an electronic device that is at least partially exposed outside the sealing cavity is referred to as the second-type electronic device. In the above solutions, the rain sensor is a typical second-type electronic device, and the first circuit board, the second circuit board, the third circuit board, the fifth circuit board, and the electrical elements arranged on these circuit boards are typical first-type electronic devices. In the embodiments of the present disclosure, all the first-type electronic devices are not fixed on the second cover body. This solution avoids providing a plug-and-socket pair for connecting wires such as conductive wires and flat cables between the first cover body and the second cover body, thereby simplifying the disassembly and assembly steps. For a second-type electronic device that needs to be arranged on the second cover body, in the present disclosure, a conductive member with elasticity serves as a conductor, or a plug-and-socket pair aligned with the assembly direction serves as an electrical connector, so that disassembly of the cover body is not affected, and the stability of the electric connection can be ensured.

When the autonomous operation device of this embodiment is assembled, the assembly may be performed as follows.

In S1, a first part is assembled. The emergency stop key and the spring, the elastic member and the cover plate, the rain sensor, and the third cover body are mounted on the second cover body. The emergency stop key and the spring need to be mounted before the third cover body is mounted, the elastic member needs to be mounted before the cover plate is mounted, and there is no limitation on the order of mounting other parts.

In S2, a second part is assembled. The first circuit board, the second circuit board, the third circuit board, the fourth circuit board, and the fifth circuit board are mounted in the first cover body, and these circuit boards are connected by using conductive wires.

In S3, the first part and the second part are connected in a snap-fitting manner, thereby completing assembly.

The order of S1 and S2 may be exchanged.

When the first cover body and the second cover body need to be disassembled (e.g., overhauled), the first cover body and the second cover body can be completely separated by simply disassembling screws connecting the first cover body and the second cover body.

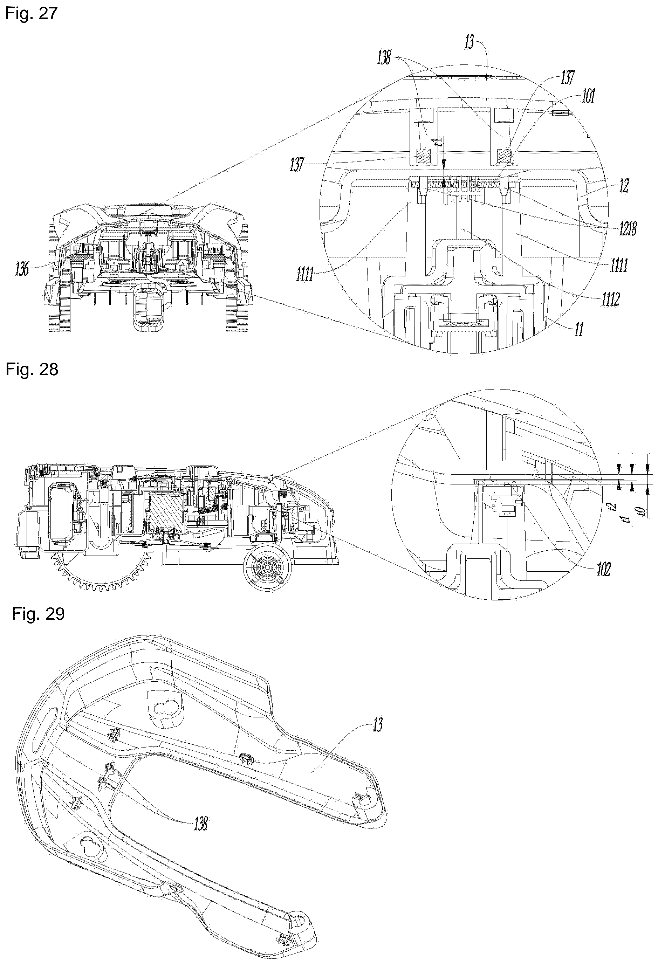

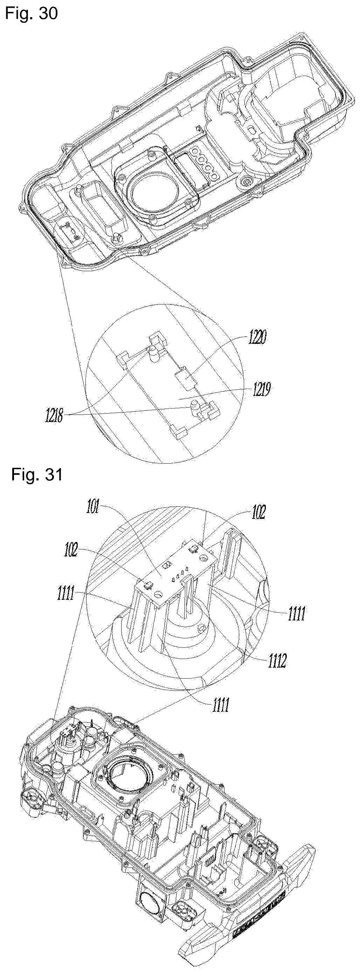

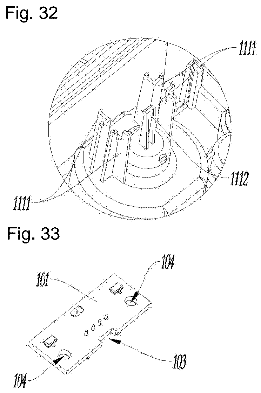

Referring to FIGs. 27 to 34, the autonomous operation device according to an embodiment of the present disclosure further includes a housing movable at least in the horizontal direction relative to the chassis. The chassis includes a first cover body 11 and a second cover body 12, and the first cover body 11 and the second cover body 12 are snap-fitted to form a chassis sealing cavity. The housing is a third cover body 13, and the third cover body 13 is connected to the second cover body 12 through a connection apparatus 136. The specific structure of the connection apparatus has been disclosed in CN113317029A, and CN113317029A is incorporated herein in its entirety. In this embodiment, the autonomous operation device further includes a sixth circuit board 101. Third Hall sensors 102 are arranged on the sixth circuit board 101, and the position of the third Hall sensor 102 corresponds to a third magnetic member 137 on the third cover body 13; the third Hall sensor is configured to detect the movement of the housing relative to the chassis, so as to determine whether the autonomous operation device collides. The third magnetic member 137 is a permanent magnet.

The sixth circuit board 101 is also fixed in the chassis sealing cavity. Specifically, the first cover body 11 is provided with sixth lower limiting portions 1111. The sixth lower limiting portion 1111 is configured as a rib extending upward from the first cover body 11, and a groove adapted to the outer shape of the sixth circuit board 101 is formed in the upper end of the sixth lower limiting portion. The first cover body 11 is further provided with a sixth clamping hook 1112, which is adapted to a sixth clamping groove 103 in the sixth circuit board 101. After the sixth circuit board 101 is mounted, the sixth lower limiting portion 1111 limits the position of the sixth circuit board 101 in the front-rear and left-right directions and limits the movement thereof. The sixth lower limiting portion 1111 cooperates with the sixth clamping hook 1112 to limit the position of the sixth circuit board 101 in the up-down direction and limit the movement thereof. According to the above structure, the sixth circuit board 101 is fixedly mounted on the first cover body 11, thereby avoiding the defect that the sixth circuit board 101 is fixed on the second cover body, and then a plug-and-socket pair is arranged between the first cover body and the second cover body in the prior art.

Further, sixth positioning holes 104 are further formed in the sixth circuit board 101, and the sixth positioning holes 104 cooperate with sixth positioning posts 1218 arranged on the second cover body 12 to position the sixth circuit board 101 in the horizontal direction. In this embodiment, the sixth positioning post 1218 is configured to extend downward from the second cover body 12. In other embodiments, the sixth positioning post may also be configured to extend upward from the first housing.

In this embodiment, the third magnetic member 137 is fixed to a magnetic member mounting portion 138 of the third cover body 13 and corresponds to the third Hall sensor 102 in the vertical direction. The third Hall sensor 102 and the third magnetic member 137 are located on the inner and outer sides of the second cover body 12, respectively, and no plug-and-socket pair is required to be arranged between the third Hall sensor and the second cover body 12 and between the third magnetic member and the second cover body, thereby not hindering the disassembly and assembly of the second cover body 12.

When no external force is applied, the distance between the third magnetic member 137 and the third Hall sensor 102 in the vertical direction is d. The value of the distance d is related to the characteristics of the third magnetic member 137 and the third Hall sensor 102. Generally, the value of d is relatively small, for example, about 5 mm. To meet the dimension requirement, the inner side of the second cover body 12 is provided with a first concave portion 1219 in a portion corresponding to the third Hall sensor 102. To further meet the dimension requirement, the inner side of the second cover body 12 is provided with a second concave portion 1220 in a portion corresponding to the sixth clamping hook 1112. Further, the mounted sixth circuit board 101 is substantially parallel to the first concave portion 1219, and the projection of the sixth circuit board on the horizontal plane completely falls within the projection of the first concave portion 1219 on the horizontal plane. The second concave portion 1220 is located within the first concave portion 1219, and the second concave portion 1220 is deeper than the first concave portion 1219.

The wall thickness t0 of the second cover body, the wall thickness t1 of the second cover body 12 at the first concave portion 1219, and the wall thickness t2 of the second cover body at the second concave portion 1220 are defined; in this embodiment, 0.6 ≤ t1/t0 ≤ 0.8, and 0.3 ≤ t2/t0 < 0.6. Further, 2.5 ≤ t0 ≤ 4, 1.8 ≤ t1 ≤ 2.2, and 1.0 ≤ t2 < 1.8. Specifically, in this embodiment, the wall thickness t0 of the second housing is 3 mm, the wall thickness t1 of the second housing at the first concave portion is 2 mm, and the wall thickness t2 of the second housing at the second concave portion is 1.5 mm.

It should be understood that although the specification is described according to embodiments, not every embodiment includes only one independent technical solution, and the description of the specification is only for clarity. A person skilled in the art should take the specification as a whole, and the technical solutions in the embodiments can be properly combined to form other embodiments that can be understood by a person skilled in the art.

The series of detailed descriptions listed above is merely specific descriptions of feasible embodiments of the present disclosure, and is not intended to limit the protection scope of the present disclosure. Any equivalent embodiment or modification made without departing from the technical spirit of the present disclosure shall fall within the protection scope of the present disclosure.

## Claims

1. An autonomous operation device, comprising a chassis, wherein the chassis comprises a first cover body and a second cover body, and the first cover body and the second cover body are snap-fitted to form a chassis sealing cavity;
further comprising a first-type electronic device, a second-type electronic device, and at least one conductive connecting member, wherein the first-type electronic device is defined as an electronic device completely arranged in the chassis sealing cavity, and the second-type electronic device is defined as an electronic device at least partially exposed outside the chassis sealing cavity,
wherein the first-type electronic device is not fixed to the second cover body, the second-type electronic device is fixed to the second cover body, and the second-type electronic device is electrically connected to the first-type electronic device through the electrical connector; when the first cover body is separated from the second cover body, the electrical connector is separated from the first-type electronic device or the second-type electronic device.

2. The autonomous operation device according to claim 1, wherein the first-type electronic device comprises a circuit board, the first cover body is provided with a lower limiting portion, and the circuit board is mounted on the first cover body through the lower limiting portion.

3. The autonomous operation device according to claim 2, wherein the second cover body is provided with an upper limiting portion, and the upper limiting portion abuts against the circuit board and limits a movement of the circuit board toward a direction of the second cover body.

4. The autonomous operation device according to claim 1, further comprising a first sensing apparatus, wherein the first sensing apparatus comprises a first sensor and a first sensing member, the first sensor is located in the chassis sealing cavity and fixed to the first cover body, the first sensing member is fixed outside the chassis sealing cavity, and the first sensing member is positioned to correspond to the first sensor.

5. The autonomous operation device according to claim 1, further comprising a display apparatus, wherein the display apparatus comprises a display screen, a button, an elastic member, and a cover plate, the button and the display screen are fixed to the first cover body, the second cover body is provided with a window at a position corresponding to the button and the display screen, the window penetrates through the second cover body, the elastic member is arranged above the button, the elastic member abuts against an action contact of the button, the cover plate is fixed to the second cover body, and the cover plate covers the window.

6. The autonomous operation device according to claim 1, further comprising an emergency stop assembly, wherein the emergency stop assembly comprises an emergency stop key and a second sensing apparatus, the second sensing apparatus comprises a second sensing member and a second sensor, the second sensor is located in the chassis sealing cavity and fixed to the first cover body, the emergency stop key is movably mounted on the second cover body, the second sensing member is fixedly mounted on the emergency stop key, and the second sensing member is positioned to correspond to a position of the second sensor.

7. The autonomous operation device according to claim 1, wherein the second-type electronic device comprises a rain sensor, the rain sensor comprises a main body and a plurality of electrode terminals fixed to the main body and spaced apart from each other, the second cover body is provided with a mounting hole penetrating through the second cover body, the main body is fixed to the mounting hole, and the electrode terminals are electrically connected to the circuit board through the electrical connector.

8. The autonomous operation device according to claim 7, wherein the electrical connector is a coil spring, a first end of the coil spring is defined as a first contact end, a second end of the coil spring is connected to the circuit board, and when the main body is positioned and mounted, the first contact end of the coil spring is in conductive contact with a corresponding electrode terminal, and the coil spring is compressed to apply an elastic force in a separation direction onto the electrode terminal.

9. The autonomous operation device according to claim 8, wherein an outer diameter of the second end of the coil spring is greater than an outer diameter of the first end.

10. The autonomous operation device according to claim 9, wherein a surface of the electrode terminal electrically connected to and in contact with the electrical connector is defined as a second contact end, and a projection of the first contact end on the second contact end of the corresponding electrode terminal at least partially falls within a range of the second contact end of the electrode terminal.

11. The autonomous operation device according to claim 10, wherein the projection of the first contact end of the electrical connector on the second contact end of the electrode terminal completely falls within the range of the second contact end of the electrode terminal.

12. The autonomous operation device according to claim 7, wherein the electrical connector is a socket, the socket is fixed to the circuit board, and the electrode terminal is provided with a pin matching the socket; when the first cover body and the second cover body are fixed, at least a part of the pin is located in the socket and is in electrical contact with the socket, and when the first cover body is separated from the second cover body, the pin is completely separated from the socket.

13. The autonomous operation device according to claim 12, wherein the first cover body and the second cover body are provided with one of a positioning portion and a receiving portion that match each other, respectively, the positioning portion extends into the receiving portion, and a minimum distance of the positioning portion extending into the receiving portion is not less than a maximum distance of the pin inserted into the socket.

14. The autonomous operation device according to claim 1, further comprising a battery assembly, wherein the battery assembly comprises a battery pack, and the battery pack is fixed to the first cover body.

15. The autonomous operation device according to claim 14, wherein the first cover body is provided with a groove for accommodating the battery pack, the battery assembly further comprises a battery fixing member, and the battery fixing member fixes the battery pack in the groove.

16. The autonomous operation device according to claim 14, wherein there is a gap between an upper surface of the battery pack and an inner surface of the second cover body, and the gap is not less than 0.8 mm or the gap is not less than 1 mm.

17. The autonomous operation device according to claim 1, further comprising a third cover body and a third sensing apparatus, wherein the third cover body is connected to the chassis and is movable at least in a horizontal direction relative to the chassis; the third sensing apparatus comprises a third sensor and a third sensing member, the third sensor is located in the chassis sealing cavity and fixed to the first cover body, the third sensing member is fixed to the third cover body, and the sensor and the sensing member are located on an inner side and an outer side of the second cover body, respectively.

18. The autonomous operation device according to claim 17, wherein the inner side of the second cover body is provided with a first concave portion in a portion corresponding to the third sensor, and the third sensor is located in the first concave portion.

19. The autonomous operation device according to claim 18, further comprising a circuit board, wherein the sensor is fixed to the circuit board, the first cover body further comprises a clamping hook, the clamping hook limits a movement of the circuit board toward a direction of the second cover body, the inner side of the second cover body is provided with a second concave portion in a portion corresponding to the clamping hook, and the second concave portion is recessed deeper than the first concave portion.

20. The autonomous operation device according to claim 19, wherein a wall thickness t0 of the second cover body, a wall thickness t1 of the second cover body at the first concave portion, and a wall thickness t2 of the second cover body at the second concave portion are defined, wherein 0.6 ≤ tl/t0 ≤ 0.8, 0.3 ≤ t2/t0 < 0.6 or 2.5 ≤ t0 ≤ 4, 1.8 ≤ t1 ≤ 2.2, and 1.0 ≤ t2 < 1.8.
